(19) Europäisches Patentamt
European Patent Office
Office européen des brevets

(11) EP 4 779 727 A1

(12) EUROPEAN PATENT APPLICATION
published in accordance with Art. 153(4) EPC

(43) Date of publication:
22.07.2026 Bulletin 2026/30

(21) Application number: 24865104.4

(22) Date of filing: 31.07.2024

(51) International Patent Classification (IPC):
$H01M\ 8/04^{(2016.01)}$   $H01M\ 8/04313^{(2016.01)}$
$H01M\ 8/04537^{(2016.01)}$   $H01M\ 8/04664^{(2016.01)}$

(52) Cooperative Patent Classification (CPC):
H01M 8/04; H01M 8/04313; H01M 8/04537;
H01M 8/04664; Y02E 60/50

(86) International application number:
PCT/JP2024/027252

(87) International publication number:
WO 2025/057597 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.09.2023 JP 2023148694

(71) Applicant: Panasonic Intellectual Property
Management Co., Ltd.
Kadoma-shi, Osaka 571-0057 (JP)

(72) Inventors:
• ABE, Miki
Kadoma-shi, Osaka 571-0057 (JP)

• KANEKO, Yasushi
Kadoma-shi, Osaka 571-0057 (JP)
• TAGUCHI, Yoshifumi
Kadoma-shi, Osaka 571-0057 (JP)
• TANAKA, Yoshikazu
Kadoma-shi, Osaka 571-0057 (JP)
• FUJII, Tsutomu
Kadoma-shi, Osaka 571-0057 (JP)
• ISE, Takehiko
Kadoma-shi, Osaka 571-0057 (JP)
• YOSHIHARA, Yasumichi
Kadoma-shi, Osaka 571-0057 (JP)

(74) Representative: Grünecker Patent- und
Rechtsanwälte
PartG mbB
Leopoldstraße 4
80802 München (DE)

(54) **PREDICTION METHOD, PREDICTION DEVICE, AND ELECTRIC POWER GENERATION SYSTEM**

(57) A prediction method according to the present disclosure includes: predicting a timing at which power that a fuel cell device including a plurality of fuel cell units is capable of outputting becomes less than a predetermined threshold that is equal to or greater than a rated output of the fuel cell device; and notifying information indicating the timing to a display device.

FIG. 3

EP 4 779 727 A1

**Description**

Technical Field

The present disclosure relates to a prediction method, a prediction device, and a power generation system.

Background Art

With regard to deterioration prediction of fuel cells, various proposals have conventionally been made. As one example, PTL 1 discloses a fuel cell system including: a reformer for reforming fuel gas; a cell stack provided with a plurality of fuel cells for performing power generation by oxidation and reduction of the fuel gas reformed by the reformer and an oxidant; a fuel gas pump for supplying the fuel gas to the reformer; an oxidant blower for supplying the oxidant to the cell stack; a water pump for supplying reforming water to the reformer; and a controller for controlling the fuel gas pump, the oxidant blower, and the water pump, wherein the controller includes stack deterioration diagnosis means for performing deterioration diagnosis of the cell stack, and the stack deterioration diagnosis means includes stack deterioration gradient value calculation means for calculating a deterioration progress state of the cell stack at each interval of a deterioration diagnosis period, stack prediction deterioration value calculation means for calculating a stack prediction deterioration value in a reference lifetime based on a stack deterioration gradient value calculated by the stack deterioration gradient value calculation means, and stack deterioration determination means for determining whether or not deterioration is progressing based on the stack deterioration prediction value calculated by the stack prediction value calculation means.

Citation List

Patent Literature

PTL 1: Japanese Unexamined Patent Application Publication No. 2018-147847

Summary of Invention

Technical Problem

The present disclosure, as one example, unlike the related-art example, aims to provide a prediction method, a prediction device, and a power generation system that makes it possible to perform deterioration prediction of a fuel cell device including a plurality of fuel cell units appropriately.

Solution to Problem

In order to solve the above problem, a prediction method according to an aspect of the present disclosure includes: predicting a timing at which power that a fuel cell device including a plurality of fuel cell units is capable of outputting becomes less than a predetermined threshold that is equal to or greater than a rated output of the fuel cell device; and notifying information indicating the timing to a display device.

A prediction device according to an aspect of the present disclosure includes: a controller configured to predict a timing at which power that a fuel cell device including a plurality of fuel cell units is capable of outputting becomes less than a predetermined threshold that is equal to or greater than a rated output of the fuel cell device; and a communicator configured to, under control of the controller, notify information indicating the timing to a display device.

A power generation system according to an aspect of the present disclosure includes: the above prediction device; and a fuel cell device including a plurality of fuel cell units.

Advantageous Effects of Invention

A prediction method, a prediction device, and a power generation system according to an aspect of the present disclosure, unlike the related-art example, produces an effect of making it possible to perform deterioration prediction of a fuel cell device including a plurality of fuel cell units appropriately.

Brief Description of Drawings

[Fig. 1] Fig. 1 is a diagram illustrating an example of a power generation system according to an embodiment.

[Fig. 2] Fig. 2 is a diagram illustrating an example of a prediction device of Fig. 1.

[Fig. 3] Fig. 3 is a flowchart illustrating an example of operation (prediction method) of a prediction device in a power generation system according to the embodiment.

[Fig. 4] Fig. 4 is a flowchart illustrating an example of operation (prediction method) of a prediction device in a power generation system according to a first example of the embodiment.

[Fig. 5] Fig. 5 is a diagram for explaining an example of an approximate straight line indicating a correlation between an average of respective values of cumulative power generation time of fuel cell units and power that a fuel cell device is capable of outputting, which is calculated from an average of respective values of maximum output of the fuel cell units corresponding to this average of the values of the cumulative power generation time.

[Fig. 6] Fig. 6 is a diagram illustrating an example of a voltage stabilization timing at which voltage stabilizes with the lapse of a predetermined time after a start of power generation by a fuel cell unit.

[Fig. 7] Fig. 7 is a flowchart illustrating an example of operation (prediction method) of a prediction device in a power generation system according to a second example of the embodiment.

[Fig. 8] Fig. 8 is a diagram for explaining an example of a method for finding a ratio of a period during which fuel cell units are performing power generation within a predetermined period.

[Fig. 9] Fig. 9 is a flowchart illustrating an example of operation (prediction method) of a prediction device in a power generation system according to a fifth example of the embodiment.

Description of Embodiments

In PTL 1, deterioration prediction of a cell stack of one fuel cell is studied, but deterioration prediction is not considered for a case in which power that a fuel cell device including a plurality of fuel cells is capable of outputting is equal to or greater than the rated output of the fuel cell device that is the guaranteed performance of said device.

In view of this, a prediction method according to a first aspect of the present disclosure includes: predicting a timing at which power that a fuel cell device including a plurality of fuel cell units is capable of outputting becomes less than a predetermined threshold that is equal to or greater than a rated output of the fuel cell device; and notifying information indicating the timing to a display device.

According to the above, unlike the related-art example, a prediction method according to this aspect makes it possible to perform deterioration prediction of a fuel cell device including a plurality of fuel cell units appropriately.

Specifically, in the prediction method according to this aspect, a comparison is made between power that a fuel cell device including a plurality of fuel cell units is capable of outputting and the rated output of the fuel cell device that is the guaranteed performance of said device. This makes it possible to notify, to an information terminal of a consumer who receives a service of supply of power generated by a fuel cell device, a display device of a maintenance company, and the like, information indicating a timing at which power that the fuel cell device is capable of outputting becomes less than a predetermined threshold that is equal to or greater than the rated output. Accordingly, as compared with a case where such information is not notified, the consumer or the maintenance worker mentioned above (hereinafter referred to as consumers and the like) can take measures such as replacement or addition of fuel cell units in a timely manner so that the power that the fuel cell device is capable of outputting does not fall below the rated output.

As a prediction method according to a second aspect of the present disclosure, in the prediction method according to the first aspect, the timing at which the power that the fuel cell device is capable of outputting becomes less than the predetermined threshold that is equal to or greater than the rated output of the fuel cell device may be predicted based on prediction of a decrease in the power that the fuel cell device is capable of outputting, the decrease being caused by deterioration of the plurality of fuel cell units.

It is generally known that, as the cumulative power generation time of each individual fuel cell unit increases, a voltage decrease of the fuel cell unit due to deterioration of the fuel cell unit occurs.

Therefore, for example, the above maximum output that decreases with the elapse of the cumulative power generation time of the fuel cell device in the future is predicted from the trend of power that is capable of outputting (maximum output) relative to the cumulative power generation time of the fuel cell device in the past. The cumulative power generation time at which the predicted maximum output reaches the above threshold can be appropriately found as the timing at which the power that the fuel cell device is capable of outputting becomes less than the above threshold.

As a prediction method according to a third aspect of the present disclosure, in the prediction method according to the first aspect or the second aspect, the timing at which the power that the fuel cell device is capable of outputting becomes less than the predetermined threshold that is equal to or greater than the rated output of the fuel cell device may be predicted based on cumulative power generation time of the fuel cell device at which the power that the fuel cell device is capable of outputting is predicted to become less than the predetermined threshold and based on a ratio of a period during which the fuel cell units are performing power generation within a predetermined period.

The "ratio of a period during which the fuel cell units are performing power generation within a predetermined period" corresponds to an operating rate of the fuel cell units in the predetermined period.

By this means, the prediction method according to this aspect makes it possible to predict the timing at which the power that the fuel cell device is capable of outputting becomes less than the predetermined threshold that is equal to or greater than the rated output of the fuel cell device more accurately than in the related art.

Specifically, within a predetermined period, if the fuel cell units are used almost evenly, the facility utilization rate of each of the fuel cell units is approximately equal to the above operating rate. The higher the facility utilization rate of the fuel cell unit is, the faster the progress speed of deterioration of this fuel cell unit is.

From the above, by taking into consideration the above operating rate in prediction of the timing at which the power that the fuel cell device is capable of outputting becomes less than the predetermined threshold that is equal to or greater than the rated output of the fuel cell device, the prediction method according to this aspect makes it possible to predict, more accurately than in a case where such an operating rate is not taken into consideration, the timing at which the power that the fuel cell device is capable of outputting becomes less than the predetermined threshold that is equal to or greater than the rated output of the fuel cell device.

As a prediction method according to a fourth aspect of the present disclosure, in the prediction method according to any one of the first to third aspects, the fuel cell device may include a greater number of fuel cell units than a number of the fuel cell units needed for the rated output of the fuel cell device calculated from rated outputs of the fuel cell units.

According to the above, in the prediction method according to this aspect, the fuel cell device includes a greater number of fuel cell units than the number of the fuel cell units needed for the rated output of the fuel cell device that is the guaranteed performance of said device, thereby appropriately realizing that the power that the fuel cell device is capable of outputting exceeds the rated output of the fuel cell device.

As a prediction method according to a fifth aspect of the present disclosure, in the prediction method according to the fourth aspect, the power that the fuel cell device is capable of outputting may be a value obtained by multiplying an average of respective values of maximum output of the plurality of fuel cell units by the number of the fuel cell units included in the fuel cell device.

As cumulative power generation time increases, each fuel cell unit deteriorates, and its output voltage decreases. The prediction method according to this aspect makes it possible to accurately grasp the power that the fuel cell device is capable of outputting by calculating the power that the fuel cell device is capable of outputting as the value obtained by multiplying the average of values of maximum output of the respective fuel cell units having decreased due to a decrease in output voltage by the number of the fuel cell units included in the fuel cell device.

As a prediction method according to a sixth aspect of the present disclosure, in the prediction method according to any one of the first to fifth aspects, together with the information indicating the timing at which the power that the fuel cell device is capable of outputting becomes less than the predetermined threshold that is equal to or greater than the rated output of the fuel cell device, information for proposing addition of the fuel cell units to the fuel cell device may be notified to the display device.

As a prediction method according to a seventh aspect of the present disclosure, in the prediction method according to the sixth aspect, the information for proposing addition of the fuel cell units may include information indicating a number of additional fuel cell units needed for making the power that the fuel cell device is capable of outputting equal to or greater than the predetermined threshold.

According to the above, since the information for proposing addition of fuel cell units to the fuel cell device is notified to the display device, the prediction method according to this aspect makes it possible for consumers and the like to take measures such as addition of fuel cell units in a timely manner.

A prediction device according to an eighth aspect of the present disclosure includes: a controller configured to predict a timing at which power that a fuel cell device including a plurality of fuel cell units is capable of outputting becomes less than a predetermined threshold that is equal to or greater than a rated output of the fuel cell device; and a communicator configured to, under control of the controller, notify information indicating the timing to a display device.

With such a configuration, a prediction device according to this aspect, unlike the related-art example, makes it possible to perform deterioration prediction of a fuel cell device including a plurality of fuel cell units appropriately. Details of operational effects produced by the prediction device according to this aspect are the same as those produced by the prediction method according to the first aspect and, therefore, description thereof is omitted.

A power generation system according to a ninth aspect of the present disclosure includes: the prediction device according to the eighth aspect; and a fuel cell device including a plurality of fuel cell units.

With such a configuration, a power generation system according to this aspect, unlike the related-art example, makes it possible to perform deterioration prediction of a fuel cell device including a plurality of fuel cell units appropriately. Details of operational effects produced by the power generation system according to this aspect are the same as those produced by the prediction method according to the first aspect and, therefore, description thereof is omitted.

Specific examples of the above aspects of the present disclosure will be described below while referring to the accompanying drawings.

Every specific example to be described below shows an example of the above aspects of the present disclosure.

Therefore, shapes, numerical values, constituent elements, the arrangement positions and connection forms of the constituent elements, etc. to be disclosed below shall not be construed to limit the scope of claims unless recited in the claims.

Among the constituent elements to be described below, those that are not recited in independent claims representing the most generic concept of the present disclosure will be described as optional constituent elements. Description will be omitted in some cases for those to which the same reference numerals are assigned in the drawings. The drawings illustrate each of the constituent elements schematically for ease of understanding, and, as such, shapes and dimensional ratios, etc. will not be represented accurately in some cases.

Furthermore, in the operation of the apparatus, as necessary, the sequential order of steps may be changed, and/or a known step(s) may be added.

(Embodiment)

[Device Configuration]

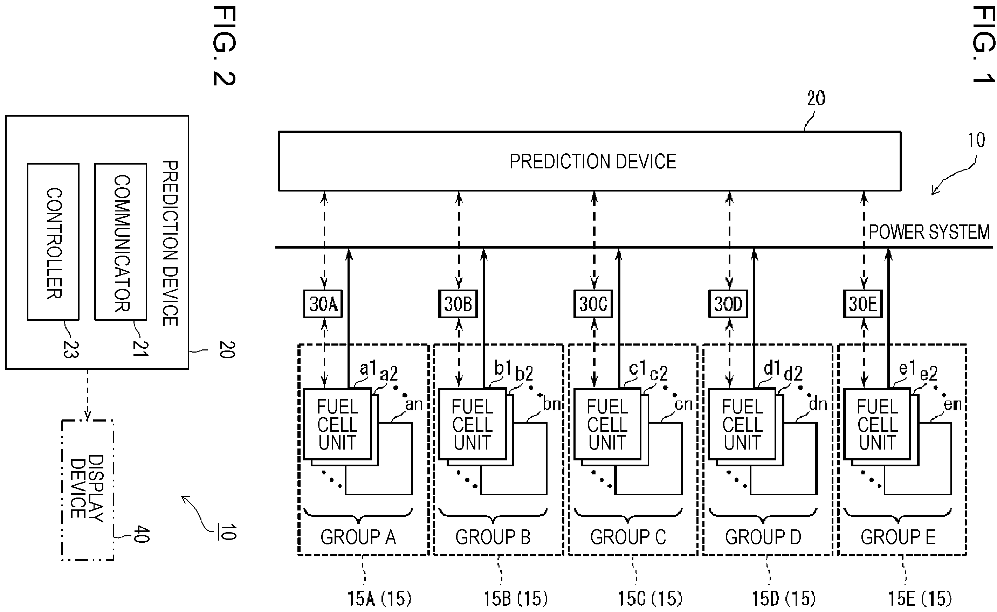

Fig. 1 is a diagram illustrating an example of a power generation system according to an embodiment. Fig. 2 is a diagram illustrating an example of a prediction device of Fig. 1.

A power generation system 10 according to the present embodiment includes a fuel cell device 15 including a plurality of fuel cell units, and a prediction device 20. Here, as illustrated in Fig. 1, the power generation system 10 includes a fuel cell unit aggregate composed of a plurality of fuel cell units a1 to an, b1 to bn, c1 to cn, d1 to dn, and e1 to en. The power generation system 10 may be, for example, a system that supplies a large amount of power to a power system. The configuration of the fuel cell device 15 of Fig. 1 will be described in further detail below.

The fuel cell unit aggregate is grouped by the plurality of fuel cell units a1 to an, b1 to bn, c1 to cn, d1 to dn, and e1 to en. Although illustration is omitted, each of these fuel cell units a1 to an, b1 to bn, c1 to cn, d1 to dn, and e1 to en is configured by a fuel cell stack, a power conditioner for converting direct-current power generated by the fuel cell stack into alternating-current power and outputting it to the power system, a control device for controlling operations of these devices, and the like.

In this example, the fuel cell unit aggregate is grouped into the fuel cell units a1 to an belonging to a fuel cell device 15A, the fuel cell units b1 to bn belonging to a fuel cell device 15B, the fuel cell units c1 to cn belonging to a fuel cell device 15C, the fuel cell units d1 to dn belonging to a fuel cell device 15D, and the fuel cell units e1 to en belonging to a fuel cell device 15E. All the fuel cell units belonging to one group are also simply referred to as "fuel cell units in the group". Hereinafter, for convenience of description, the fuel cell units a1 to an, b1 to bn, c1 to cn, d1 to dn, and e1 to en may be abbreviated as "fuel cell units 15ij (i = a to e, j = 1 to n)".

However, the above configuration of the fuel cell device 15 is just an example, and this example does not imply any limitation. For example, the fuel cell device 15 may be configured as a single group, and a plurality of fuel cell units may be provided in this group.

Each of control devices 30A to 30E is provided for the corresponding one of Group A, Group B, Group C, Group D, and Group E, in other words, for the corresponding one of the fuel cell devices 15A to 15E, and controls the respective operations of the fuel cell units in the group.

For example, the control device 30A controls, via a communication network, the respective outputs of the fuel cell units a1 to an so as to enable efficient operations (for example, optimization of lifetime) of the fuel cell units a1 to an belonging to Group A. Note that the operations of the fuel cell units belonging to each group may be directly controlled by the control device 30A to 30E, without providing any control device in the fuel cell unit.

The control devices 30A to 30E only need to have a control function, and include a computation processing unit (not illustrated), a storage unit (not illustrated) that stores a control program, and a communicator (not illustrated). By reading out and executing the control program stored in the storage unit by the computation processing unit, predetermined control is performed in the control devices 30A to 30E. The computation processing unit is, for example, a microprocessor. The storage unit is, for example, a memory.

As illustrated in Fig. 2, the prediction device 20 includes a communicator 21 and a controller 23.

The controller 23 predicts a timing at which power that the fuel cell device 15 including the fuel cell units 15ij (i = a to e, j = 1 to n) is capable of outputting becomes less than a predetermined threshold that is equal to or greater than a rated output of the fuel cell device 15.

Here, the "rated output of the fuel cell device 15" means a desired power that the fuel cell device 15 guarantees. For this reason, by the fuel cell device 15, the desired power that the fuel cell device 15 guarantees, or power exceeding the desired power, can be output. A configuration example of the fuel cell device 15 capable of outputting the latter will be described in a third example.

Under the control of the controller 23, the communicator 21 notifies, to a display device 40, information indicating the timing at which power that the fuel cell device 15 is capable of outputting becomes less than the predetermined threshold that is equal to or greater than the rated output of the fuel cell device 15. This information may be, for example, a date in a year-month-day format on a calendar displayed on the display device 40. As the "display device 40", for example, an information terminal of a consumer who receives a service of supply of power generated by the power generation system 10, a display device of a maintenance company, and the like can be cited, though not limited thereto. This enables the consumer who receives the service of supply of power generated by the power generation system 10, or a maintenance worker of the fuel cell device 15 (hereinafter referred to as "consumers and the like"), to easily know the timing at which power that the fuel cell device 15 is capable of outputting becomes less than the predetermined threshold that is equal to or greater than the rated output of the fuel cell device 15.

In this example, the timing at which power that the fuel cell device 15 is capable of outputting becomes less than the predetermined threshold that is equal to or greater than the rated output of the fuel cell device 15 is predicted by the controller 23. However, this does not imply any limitation.

For example, the timing at which power that the fuel cell device 15 is capable of outputting becomes less than the predetermined threshold that is equal to or greater than the rated output of the fuel cell device 15 may be predicted by a control device other than the controller 23 (for example, by the control devices 30A to 30E).

The controller 23 only needs to have a control function, and includes a computation processing unit (not illustrated), and a storage unit (not illustrated) that stores a control program. By reading out and executing the control program stored in the storage unit by the computation processing unit, predetermined control is performed by the controller 23. The computation processing unit is, for example, a microprocessor. The storage unit is, for example, a memory.

The above configuration of the power generation system 10 is just an example, and this example does not imply any limitation. For example, the prediction device 20 may be integrated with the control devices 30A to 30E, in other words, may be provided with the control function of the control devices 30A to 30E, and may directly control the respective operations of the fuel cell units in the group.

[Operation]

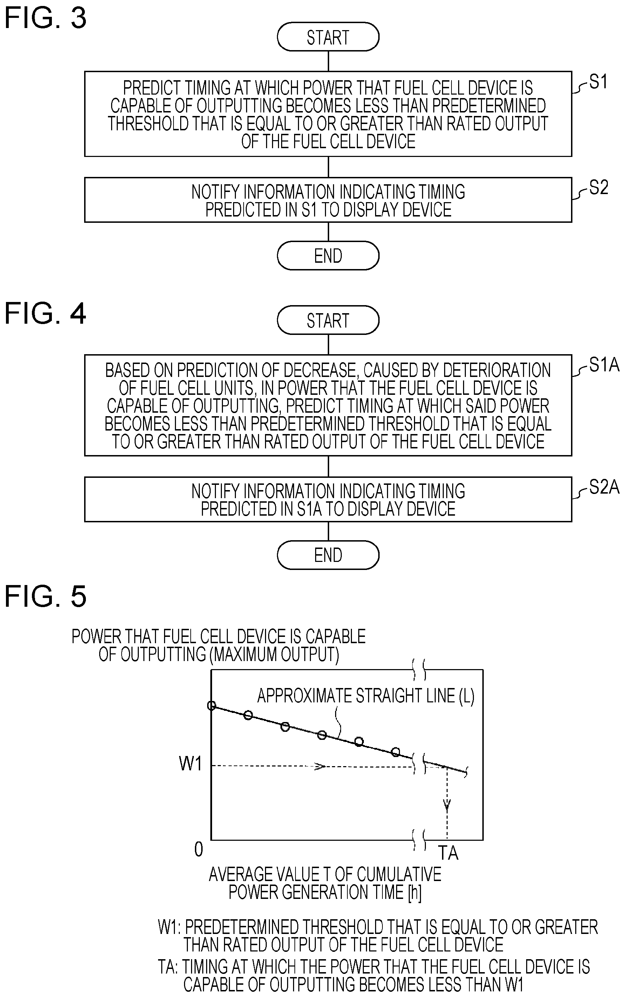

Fig. 3 is a flowchart illustrating an example of operation (prediction method) of a prediction device in a power generation system according to the embodiment. The operation described below may be performed by, for example, reading out the control program from the storage unit of the controller 23 by the computation processing unit of the controller 23. However, it is not necessarily essential that the operation described below be performed by the controller 23. An operator may perform a part of the operation. In the following example, a case will be described in which the operation is controlled by the controller 23.

Upon the start of operation of the prediction device 20, in step S1, the timing at which power that the fuel cell device 15 including the fuel cell units 15ij (i = a to e, j = 1 to n) is capable of outputting becomes less than the predetermined threshold that is equal to or greater than the rated output of the fuel cell device 15 is predicted. Then, in step S2, information indicating the timing predicted in step S1 is notified to the display device 40.

The prediction of the above timing may be performed based on prediction of a decrease, caused by deterioration of the fuel cell units, in power that the fuel cell device is capable of outputting. Details will be described in a first example. As cumulative power generation time increases, a fuel cell unit deteriorates, and its output voltage decreases. Due to the decrease in the output voltage of the fuel cell unit, the maximum output of the fuel cell unit decreases, and as a result, the power that the fuel cell device is capable of outputting also decreases.

In the prediction of the above timing, a ratio R of a period during which the fuel cell units 15ij (i = a to e, j = 1 to n) are performing power generation within a predetermined period may be taken into consideration. The ratio R of the period will be described in detail in a second example.

According to the present embodiment described above, unlike the related-art example, it is possible to perform deterioration prediction of the fuel cell device 15 including the fuel cell units 15ij (i = a to e, j = 1 to n) appropriately.

Specifically, in the present embodiment, a comparison is made between the power that the fuel cell device 15 including the fuel cell units 15ij (i = a to e, j = 1 to n) is capable of outputting and the rated output of the fuel cell device 15 that is the guaranteed performance of said device. This makes it possible to notify, to the display device 40, information indicating the timing at which power that the fuel cell device 15 is capable of outputting becomes less than the predetermined threshold that is equal to or greater than the rated output mentioned above. Accordingly, as compared with a case where such information is not notified, consumers and the like can take measures such as replacement or addition of fuel cell units in a timely manner so that the power that the fuel cell device 15 is capable of outputting does not fall below the rated output.

(First Example)

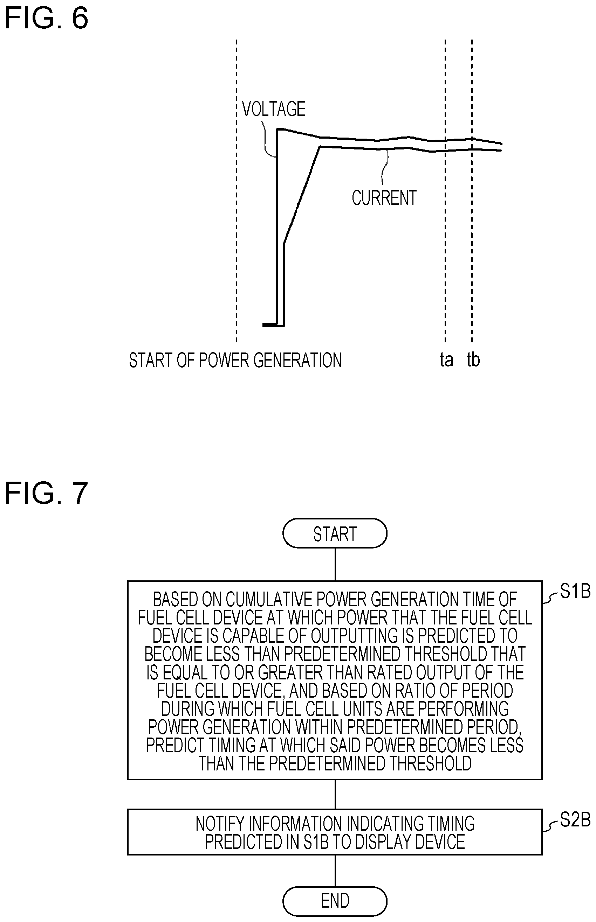

Fig. 4 is a flowchart illustrating an example of operation (prediction method) of a prediction device in a power generation system according to the embodiment. Fig. 5 is a diagram for explaining an example of an approximate straight line indicating a correlation between an average of respective values of cumulative power generation time of the fuel cell units and power that the fuel cell device is capable of outputting, which is calculated from an average of respective values of maximum output of the fuel cell units corresponding to this average of the values of the cumulative power generation time. Fig. 6 is a diagram illustrating an example of a voltage stabilization timing at which voltage stabilizes with the lapse of a predetermined time after a start of power generation by a fuel cell unit.

The operation described below may be performed by, for example, reading out the control program from the storage unit of the controller 23 by the computation processing unit of the controller 23. However, it is not necessarily essential that the operation described below be performed by the controller 23. An operator may perform a part of the operation. In the following example, a case will be described in which the operation is controlled by the controller 23.

Upon the start of operation of the prediction device 20, in step S1A, based on prediction of a decrease, caused by deterioration of the fuel cell unit(s) 15ij (i = a to e, j = 1 to n), in power that the fuel cell device 15 is capable of outputting, a timing TA at which said power becomes less than a predetermined threshold W1 that is equal to or greater than the rated output of the fuel cell device 15 is predicted (see Fig. 5). Then, in step S2A, information indicating the timing TA predicted in step S1A is notified to the display device 40.

Specifically, as illustrated in Fig. 5, an approximate straight line L is found, wherein this line indicates a correlation between an average T of respective values of cumulative power generation time of the fuel cell units 15ij (i = a to e, j = 1 to n) and power that the fuel cell device 15 is capable of outputting, which is calculated from an average WU of respective values of maximum output of the fuel cell units 15ij (i = a to e, j = 1 to n) corresponding to this average T of the values of the cumulative power generation time. That is, "power that the fuel cell device 15 is capable of outputting (maximum output)" in Fig. 5 is a value obtained by multiplying the above average WU of the values of the maximum output by "the number of the fuel cell units 15ij (i = a to e, j = 1 to n) included in the fuel cell device 15", which will be described later.

That is, since it is generally known that, as the cumulative power generation time of each individual fuel cell unit increases, a decrease in output voltage of the fuel cell unit due to deterioration of the fuel cell unit occurs, it is possible to obtain the above approximate straight line L on the basis of the above average indicated by circles in Fig. 5 (known data). Accordingly, from the approximate straight line L and the predetermined threshold W1, the timing TA, at which the power that the fuel cell device 15 is capable of outputting becomes less than the predetermined threshold W1 that is equal to or greater than the rated output of the fuel cell device 15, is found.

Here, the "average WU of respective values of maximum output of the fuel cell units 15ij (i = a to e, j = 1 to n)" may be found from known data regarding voltage and current in a time slot [ta, tb] between a point in time ta and a point in time tb after a predetermined time has elapsed from the start of power generation by each of the fuel cell units 15ij (i = a to e, j = 1 to n). The time slot [ta, tb] is, as illustrated in Fig. 6, an appropriate voltage stabilization timing at which voltage stabilizes with the lapse of a predetermined time after a start of power generation in rated operation. Therefore, the above voltage and current may be, respectively, average values of voltage and current in the time slot [ta, tb]. The time between the point in time ta and the point in time tb may be, for example, about 30 minutes, but is not limited thereto. The above known data are data at a power generation start of appropriate time from power generation time of "zero" to the current cumulative power generation time of each of the fuel cell units 15ij (i = a to e, j = 1 to n), and are stored in the storage unit of the prediction device 20.

According to the present example described above, the above maximum output that decreases with the elapse of cumulative power generation time in the future is predicted from the trend of power that the fuel cell device 15 is capable of outputting (maximum output) relative to the cumulative power generation time of the fuel cell device 15 in the past. The cumulative power generation time at which the predicted maximum output reaches the above threshold W1 can be appropriately found as the timing TA at which the power that the fuel cell device is capable of outputting becomes less than the above threshold W1.

The prediction method, the prediction device 20, and the power generation system 10 of the present example may be the same as those of the embodiment, except for the above features.

(Second Example)

Fig. 7 is a flowchart illustrating an example of operation (prediction method) of a prediction device in a power generation system according to a second example of the embodiment. The operation described below may be performed by, for example, reading out the control program from the storage unit of the controller 23 by the computation processing unit of the controller 23. However, it is not necessarily essential that the operation described below be performed by the controller 23. An operator may perform a part of the operation. In the following example, a case will be described in which the operation is controlled by the controller 23.

Upon the start of operation of the prediction device 20, in step S1B, based on cumulative power generation time of the fuel cell device 15 at which power that the fuel cell device 15 including the fuel cell units 15ij (i = a to e, j = 1 to n) is capable of outputting is predicted to become less than a predetermined threshold that is equal to or greater than a rated output of the fuel cell device 15, and based on a ratio R of a period during which the fuel cell device 15 is performing power generation within a predetermined period, a timing TB at which the power that the fuel cell device 15 is capable of outputting becomes less than the predetermined threshold that is equal to or greater than the rated output of the fuel cell device is predicted. Then, in step S2B, information indicating the timing TB predicted in step S1B is notified to the display device 40.

Here, the "ratio R of the period" corresponds to an operating rate. The operating rate can be found using, for example, the following formula (1):

"Operating rate" = "average of values of cumulative power generation time of the fuel cell units 15ij (i = a to e, j = 1 to n)" / "average of values of cumulative energization time of the fuel cell units 15ij (i = a to e, j = 1 to n)" ... (1)     (1)

In the formula (1), the "average of values of cumulative power generation time of the fuel cell units 15ij (i = a to e, j = 1 to n)" can be found by dividing a total of the respective values of cumulative power generation time of the fuel cell units 15ij (i = a to e, j = 1 to n) by the number of the fuel cell units 15ij (i = a to e, j = 1 to n). The "average of values of cumulative energization time of the fuel cell units 15ij (i = a to e, j = 1 to n)" can be found by dividing a total of the respective values of cumulative energization time of the fuel cell units 15ij (i = a to e, j = 1 to n) by the number of the fuel cell units 15ij (i = a to e, j = 1 to n).

Therefore, as one example, in step S1B, when the "cumulative power generation time of the fuel cell device 15 at which power that the fuel cell device 15 is capable of outputting is predicted to become less than a predetermined threshold that is equal to or greater than a rated output of the fuel cell device 15" is regarded as, for example, "a time corresponding to the timing TA of Fig. 5", the "timing TB at which the power that the fuel cell device 15 is capable of outputting becomes less than the predetermined threshold that is equal to or greater than the rated output of the fuel cell device" can be found using, for example, the following formula (2) and formula (3):

"Cumulative energization time of the fuel cell device 15 at which said power is predicted to become less than the predetermined threshold that is equal to or greater than the rated output of the fuel cell device" = "the time corresponding to the timing TA of Fig. 5" / "operating rate" ... (2)     (2)

"Timing TB at which the power that the fuel cell device 15 is capable of outputting becomes less than the predetermined threshold that is equal to or greater than the rated output of the fuel cell device" = "current date" + "cumulative energization time [h] of the formula (2)" - "current average of values of cumulative energization time [h] of the fuel cell units 15ij (i = a to e, j = 1 to n)" ... (3)     (3)

According to the present example described above, it is possible to predict the timing TB at which the power that the fuel cell device 15 is capable of outputting becomes less than the predetermined threshold that is equal to or greater than the rated output of the fuel cell device 15 more accurately than in the related art.

Specifically, within a predetermined period, if the fuel cell units 15ij (i = a to e, j = 1 to n) are used almost evenly, the facility utilization rate of each of the fuel cell units ij (i = a to e, j = 1 to n) is approximately equal to the above operating rate. The higher the facility utilization rate of the fuel cell unit 15ij (i = a to e, j = 1 to n) is, the faster the progress speed of deterioration of the fuel cell unit 15ij (i = a to e, j = 1 to n) is.

From the above, according to the present example, by taking into consideration the above operating rate in prediction of the timing TB at which the power that the fuel cell device 15 is capable of outputting becomes less than the predetermined threshold that is equal to or greater than the rated output of the fuel cell device 15, it becomes possible to predict, more accurately than in a case where such an operating rate is not taken into consideration, the timing at which the power that the fuel cell device 15 is capable of outputting becomes less than the predetermined threshold that is equal to or greater than the rated output of the fuel cell device 15.

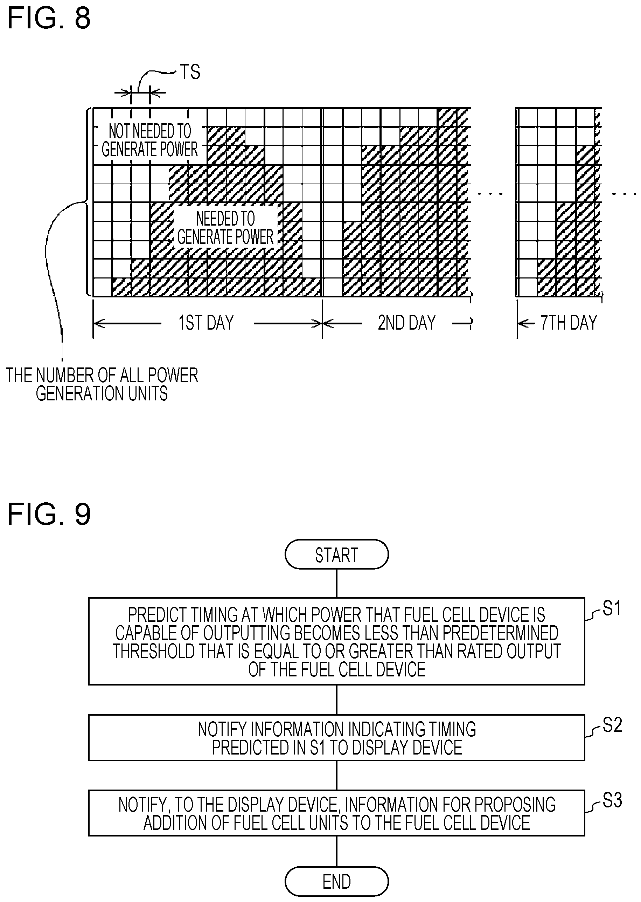

However, the above prediction method is just an example, and this example does not imply any limitation. For example, the "ratio R of the period" may be converted on a number basis of the fuel cell device 15, as illustrated in Fig. 8.

Specifically, a number-based operating rate of the fuel cell device 15 means a ratio of a total number of the fuel cell units 15ij (i = a to e, j = 1 to n) that are determined to be "required to generate power" in each time slot TS within a predetermined period to a total number of the fuel cell units 15ij (i = a to e, j = 1 to n) that are "required to generate power" in each time slot TS in a case where it is assumed that all the fuel cell units 15ij (i = a to e, j = 1 to n) of the fuel cell device 15 are "required to generate power" throughout all the time slots within the predetermined period.

That is, the number-based operating rate of the fuel cell device 15 is obtained from an integral of the numbers of the fuel cell units 15ij (i = a to e, j = 1 to n) that are "required to generate power" in the time slots TS and an integrated value of the numbers of all the fuel cell units 15ij (i = a to e, j = 1 to n) in the time slots TS, and such a number-based operating rate corresponds to the "ratio R of the period."

The prediction method, the prediction device 20, and the power generation system 10 of the present example may be the same as those of the embodiment, or the first example of the embodiment, except for the above features.

(Third Example)

A prediction method according to a third example of the embodiment is the same as the prediction method of the embodiment except that the fuel cell device 15 includes a greater number of fuel cell units than the number of the fuel cell units 15ij (i = a to e, j = 1 to n) needed for the rated output of the fuel cell device 15 calculated from the rated outputs of the fuel cell units 15ij (i = a to e, j = 1 to n).

According to the present example described above, the fuel cell device 15 includes a greater number of fuel cell units than the number of the fuel cell units 15ij (i = a to e, j = 1 to n) needed for the rated output of the fuel cell device 15 that is the guaranteed performance of said device, thereby appropriately realizing that the power that the fuel cell device 15 is capable of outputting exceeds the rated output of the fuel cell device 15.

The prediction method, the prediction device 20, and the power generation system 10 of the present example may be the same as those of any of the embodiment and the first to second examples of the embodiment, except for the above features.

(Fourth Example)

A prediction method according to a fourth example of the embodiment is the same as the prediction method of the embodiment except that the power that the fuel cell device 15 is capable of outputting is a value obtained by multiplying the average WU of respective values of maximum output of the fuel cell units 15ij (i = a to e, j = 1 to n) by the number of the fuel cell units 15ij (i = a to e, j = 1 to n) included in the fuel cell device 15.

Here, as already described in the second example above, the "average WU of respective values of maximum output of the fuel cell units 15ij (i = a to e, j = 1 to n)" may be found from known data regarding voltage and current in a time slot [ta, tb] between a point in time ta and a point in time tb after a predetermined time has elapsed from the start of power generation by each of the fuel cell units 15ij (i = a to e, j = 1 to n). The time slot [ta, tb] is, as illustrated in Fig. 6, an appropriate voltage stabilization timing at which voltage stabilizes with the lapse of a predetermined time after a start of power generation in rated operation. Therefore, the above voltage and current may be, respectively, average values of voltage and current in the time slot [ta, tb]. The time between the point in time ta and the point in time tb may be, for example, about 30 minutes, but is not limited thereto. The above known data are data at a power generation start of appropriate time from power generation time of "zero" to the current cumulative power generation time of each of the fuel cell units 15ij (i = a to e, j = 1 to n), and are stored in the storage unit of the prediction device 20.

"The number of the fuel cell units 15ij (i = a to e, j = 1 to n) included in the fuel cell device 15" includes the number of backup fuel cell units for maintaining the rated output of the fuel cell device 15 that is the guaranteed performance of said device by a total output of the fuel cell units 15ij (i = a to e, j = 1 to n) that are currently generating power, and does not include the number of backup fuel cell units as a replacement for fuel cell units that are currently under cooling stop.

According to the present example described above, each of the fuel cell units 15ij (i = a to e, j = 1 to n) deteriorates as its cumulative power generation time increases, and its voltage decreases. The prediction method of the present example makes it possible to accurately grasp the power that the fuel cell device 15 is capable of outputting by calculating the power that the fuel cell device 15 is capable of outputting as the value obtained by multiplying the average WU of values of maximum output of the fuel cell units 15ij (i = a to e, j = 1 to n) having decreased due to a decrease in output voltage by the number of the fuel cell units 15ij (i = a to e, j = 1 to n) included in the fuel cell device 15.

The prediction method, the prediction device 20, and the power generation system 10 of the present example may be the same as those of any of the embodiment and the first to third examples of the embodiment, except for the above features.

(Fifth Example)

Fig. 9 is a flowchart illustrating an example of operation (prediction method) of a prediction device in a power generation system according to a fifth example of the embodiment. The operation described below may be performed by, for example, reading out the control program from the storage unit of the controller 23 by the computation processing unit of the controller 23. However, it is not necessarily essential that the operation described below be performed by the controller 23. An operator may perform a part of the operation. In the following example, a case will be described in which the operation is controlled by the controller 23.

Steps S1 and S2 in Fig. 9 are the same as steps S1 and S2 in Fig. 3, respectively, and thus detailed description is omitted.

Along with the operation of step S2, or after the operation of step S2, in step S3, information for proposing addition of fuel cell unit(s) to the fuel cell device 15 is notified to the display device 40.

Here, the "information for proposing addition of fuel cell unit(s) to the fuel cell device 15" may include information indicating the number of additional fuel cell unit(s) needed to make the power that the fuel cell device 15 is capable of outputting equal to or greater than a predetermined threshold. In this case, when the power that the fuel cell device 15 is capable of outputting is raised to power corresponding to an arbitrary set value S that is equal to or greater than the predetermined threshold, "the number of additional fuel cell unit(s)" can be found using, for example, the following formula (4):

"Number of additional fuel cell units" = (set value S - predetermined threshold) / rated output of a single fuel cell unit ... (4)　　　　　　(4)

The set value S is greater than the predetermined threshold, and may be set such that the value of the numerator on the right-hand side of the formula (4) becomes an integer multiple of the rated output of the single fuel cell unit. For example, in a case where the rated output of the single fuel cell unit is 5 kW, where the rated output of the fuel cell device 15 is 100 kW, and where the predetermined threshold is 100 kW, the set value S is set to, for example, 110 kW or 115 kW such that, in the calculation of the number of additional fuel cell unit(s) in the formula (4), the value is exactly divisible into two or three.

According to the present example described above, since the information for proposing addition of fuel cell unit(s) to the fuel cell device 15 is notified to the display device 40, consumers and the like can take measures such as addition of fuel cell unit(s) in a timely manner.

The prediction method, the prediction device 20, and the power generation system 10 of the present example may be the same as those of any of the embodiment and the first to fourth examples of the embodiment, except for the above features.

The embodiment and the first to fifth examples of the embodiment may be combined with each other unless they exclude each other. From the above description, many improvements and other embodiments of the present disclosure will be apparent to those skilled in the art. Therefore, the above description should be interpreted just as giving examples, and is presented for the purpose of teaching the best mode for carrying out the present disclosure to those skilled in the art. Without departing from the spirit of the present disclosure, details of its structure and/or functions can be substantially changed.

Industrial Applicability

One aspect of the present disclosure, unlike the related-art example, can be used for a prediction method, a prediction device, and a power generation system that makes it possible to perform deterioration prediction of a fuel cell device including a plurality of fuel cell units appropriately.

Reference Signs List

10 power generation system
15 fuel cell device
15A fuel cell device
15B fuel cell device
15C fuel cell device
15D fuel cell device
15E fuel cell device
20 prediction device
21 communicator
23 controller
30A control device
30B control device
30C control device
30D control device
30E control device
40 display device
a1 to an fuel cell unit

b1 to bn fuel cell unit
c1 to cn fuel cell unit
d1 to dn fuel cell unit
e1 to en fuel cell unit

**Claims**

1. A prediction method comprising:

   predicting a timing at which power that a fuel cell device including a plurality of fuel cell units is capable of outputting becomes less than a predetermined threshold that is equal to or greater than a rated output of the fuel cell device; and
   notifying information indicating the timing to a display device.

2. The prediction method according to claim 1, wherein
   the timing is predicted based on prediction of a decrease in the power that the fuel cell device is capable of outputting, the decrease being caused by deterioration of the fuel cell units.

3. The prediction method according to claim 1 or 2, wherein
   the timing is predicted based on cumulative power generation time of the fuel cell device at which the power that the fuel cell device is capable of outputting is predicted to become less than the predetermined threshold and based on a ratio of a period during which the fuel cell units are performing power generation within a predetermined period.

4. The prediction method according to any one of claims 1 to 3, wherein
   the fuel cell device includes a greater number of the fuel cell units than a number of the fuel cell units needed for the rated output of the fuel cell device calculated from rated outputs of the fuel cell units.

5. The prediction method according to claim 4, wherein
   the power that the fuel cell device is capable of outputting is a value obtained by multiplying an average of respective values of maximum output of the plurality of fuel cell units by the number of the fuel cell units included in the fuel cell device.

6. The prediction method according to any one of claims 1 to 5, wherein
   together with the information indicating the timing, information for proposing addition of the fuel cell units to the fuel cell device is notified to the display device.

7. The prediction method according to claim 6, wherein
   the information for proposing addition of the fuel cell units includes information indicating a number of additional fuel cell units needed to make the power that the fuel cell device is capable of outputting equal to or greater than the predetermined threshold.

8. A prediction device comprising:

   a controller configured to predict a timing at which power that a fuel cell device including a plurality of fuel cell units is capable of outputting becomes less than a predetermined threshold that is equal to or greater than a rated output of the fuel cell device; and
   a communicator configured to, under control of the controller, notify information indicating the timing to a display device.

9. A power generation system comprising:

   the prediction device according to claim 8; and
   a fuel cell device including a plurality of fuel cell units.

FIG. 1

FIG. 2

## FIG. 3

START

PREDICT TIMING AT WHICH POWER THAT FUEL CELL DEVICE IS CAPABLE OF OUTPUTTING BECOMES LESS THAN PREDETERMINED THRESHOLD THAT IS EQUAL TO OR GREATER THAN RATED OUTPUT OF THE FUEL CELL DEVICE —S1

NOTIFY INFORMATION INDICATING TIMING PREDICTED IN S1 TO DISPLAY DEVICE —S2

END

## FIG. 4

START

BASED ON PREDICTION OF DECREASE, CAUSED BY DETERIORATION OF FUEL CELL UNITS, IN POWER THAT THE FUEL CELL DEVICE IS CAPABLE OF OUTPUTTING, PREDICT TIMING AT WHICH SAID POWER BECOMES LESS THAN PREDETERMINED THRESHOLD THAT IS EQUAL TO OR GREATER THAN RATED OUTPUT OF THE FUEL CELL DEVICE —S1A

NOTIFY INFORMATION INDICATING TIMING PREDICTED IN S1A TO DISPLAY DEVICE —S2A

END

## FIG. 5

POWER THAT FUEL CELL DEVICE IS CAPABLE OF OUTPUTTING (MAXIMUM OUTPUT)

APPROXIMATE STRAIGHT LINE (L)

W1

0                TA

AVERAGE VALUE T OF CUMULATIVE POWER GENERATION TIME [h]

W1: PREDETERMINED THRESHOLD THAT IS EQUAL TO OR GREATER THAN RATED OUTPUT OF THE FUEL CELL DEVICE

TA: TIMING AT WHICH THE POWER THAT THE FUEL CELL DEVICE IS CAPABLE OF OUTPUTTING BECOMES LESS THAN W1

# FIG. 6

START OF POWER GENERATION          ta tb

# FIG. 7

START

BASED ON CUMULATIVE POWER GENERATION TIME OF FUEL CELL DEVICE AT WHICH POWER THAT THE FUEL CELL DEVICE IS CAPABLE OF OUTPUTTING IS PREDICTED TO BECOME LESS THAN PREDETERMINED THRESHOLD THAT IS EQUAL TO OR GREATER THAN RATED OUTPUT OF THE FUEL CELL DEVICE, AND BASED ON RATIO OF PERIOD DURING WHICH FUEL CELL UNITS ARE PERFORMING POWER GENERATION WITHIN PREDETERMINED PERIOD, PREDICT TIMING AT WHICH SAID POWER BECOMES LESS THAN THE PREDETERMINED THRESHOLD — S1B

NOTIFY INFORMATION INDICATING TIMING PREDICTED IN S1B TO DISPLAY DEVICE — S2B

END

FIG. 8

TS

NOT NEEDED TO GENERATE POWER

NEEDED TO GENERATE POWER

THE NUMBER OF ALL POWER GENERATION UNITS

|← 1ST DAY →|← 2ND DAY →| |← 7TH DAY

FIG. 9

START

PREDICT TIMING AT WHICH POWER THAT FUEL CELL DEVICE IS CAPABLE OF OUTPUTTING BECOMES LESS THAN PREDETERMINED THRESHOLD THAT IS EQUAL TO OR GREATER THAN RATED OUTPUT OF THE FUEL CELL DEVICE — S1

NOTIFY INFORMATION INDICATING TIMING PREDICTED IN S1 TO DISPLAY DEVICE — S2

NOTIFY, TO THE DISPLAY DEVICE, INFORMATION FOR PROPOSING ADDITION OF FUEL CELL UNITS TO THE FUEL CELL DEVICE — S3

END

**EP 4 779 727 A1**

<table>
<tr><td colspan="2"><b>INTERNATIONAL SEARCH REPORT</b></td><td>International application No.<br><br><b>PCT/JP2024/027252</b></td></tr>
</table>

**A. CLASSIFICATION OF SUBJECT MATTER**

*H01M 8/04*(2016.01)i; *H01M 8/04313*(2016.01)i; *H01M 8/04537*(2016.01)i; *H01M 8/04664*(2016.01)i
FI:  H01M8/04 Z; H01M8/04313; H01M8/04537; H01M8/04664

According to International Patent Classification (IPC) or to both national classification and IPC

**B. FIELDS SEARCHED**

Minimum documentation searched (classification system followed by classification symbols)

   H01M8/04; H01M8/04313; H01M8/04537; H01M8/04664

Documentation searched other than minimum documentation to the extent that such documents are included in the fields searched

   Published examined utility model applications of Japan 1922-1996
   Published unexamined utility model applications of Japan 1971-2024
   Registered utility model specifications of Japan 1996-2024
   Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2022-154919 A (HONDA MOTOR CO., LTD.) 13 October 2022 (2022-10-13)<br>    paragraphs [0023]-[0076], fig. 1-7 | 1-4, 6-9 |
| A | | 5 |
| Y | JP 11-195423 A (NIPPON TELEGRAPH AND TELEPHONE CORPORATION) 21 July 1999 (1999-07-21)<br>    paragraphs [0020]-[0050], fig. 2 | 1-4, 6-9 |
| Y | WO 2022/209687 A1 (PANASONIC INTELLECTUAL PROPERTY MANAGEMENT CO., LTD.) 06 October 2022 (2022-10-06)<br>    paragraphs [0016]-[0068], fig. 1-7 | 3 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 October 2024** | **22 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

16

## INTERNATIONAL SEARCH REPORT
### Information on patent family members

International application No.

**PCT/JP2024/027252**

| Patent document cited in search report | | | Publication date (day/month/year) | Patent family member(s) | | | Publication date (day/month/year) |
|---|---|---|---|---|---|---|---|
| JP | 2022-154919 | A | 13 October 2022 | US paragraphs [0025]-[0087], fig. 1-7 CN | 2022/0320563 115149061 | A1 A | |
| JP | 11-195423 | A | 21 July 1999 | (Family: none) | | | |
| WO | 2022/209687 | A1 | 06 October 2022 | US paragraphs [0029]-[0081], fig. 1-7 EP CN | 2023/0411657 4318692 117099232 | A1 A1 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018147847 A